# EUROPEAN PATENT SPECIFICATION

(11) **EP 4 101 279 B1**
(45) Date of publication and mention of the grant of the patent: **13.05.2026**
(21) Application number: 21177936.8
(22) Date of filing: 07.06.2021
(51) Int. Cl.: A01C 7/00, A01G 24/48, A01G 9/08, A01C 5/04, A01C 7/18

(54) **A METHOD AND A SEED INSERTION DEVICE FOR PLACING SEEDS INSIDE A GROWTH SUBSTRATE**
VERFAHREN UND SAMENEINFÜHRVORRICHTUNG ZUM EINBRINGEN VON SAMEN IN EIN WACHSTUMSSUBSTRAT
PROCÉDÉ ET DISPOSITIF D'INSERTION DE SEMENCE POUR PLACER DES SEMENCES À L'INTÉRIEUR D'UN SUBSTRAT DE CROISSANCE

(43) Date of publication of application: 14.12.2022
(73) Proprietor: Click & Grow OÜ, 50603 Tartu (EE)
(72) Inventor: Kurg, Indrek, 50603 Tartu (EE); Lepp, Mattias, 50603 Tartu (EE)
(74) Representative: Primrose Oy

(56) References cited:
- EP-A1- 3 036 989
- EP-B1- 3 148 317
- DE-A1- 2 854 923
- DE-A1- 3 004 900
- DE-C1- 3 130 795
- US-A- 4 703 704

## Description

### FIELD OF THE INVENTION

The present invention relates to a method for placing seeds inside a growth substrate and more particularly to a method for placing seeds as defined in the preamble of the independent claim 1. The present invention further relates to a seed insertion device and more particularly to a seed insertion device as defined in the preamble of the independent claim 10.

### BACKGROUND OF THE INVENTION

Prior art document WO 2016/129996 A1 discloses a method of manufacturing a grow plug in which components of organic material are formed into a body and are dried and at least a single seed grain is deposited on the top side of the body and is connected to the body. Forming the organic material components into a dried body is realized by bonding together components of the organic material by means of a glue and drying them.

One of the problems associated with the prior art is that the deposition of the seed on the top side of the body requires the step of attaching the seed to the grow plug which is performed as presented in the description of the document by bonding the seed to the body by glue. The method is therefore complex as it requires extra steps for the gluing as well as for drying the glue such that the seed remains in connection with the body. Further gluing of the seed to the body requires preciseness so that the seed is securely bonded to the body such that it can grow. Another problem is that exposing the seed to a solvent such as water used in the glue may have a negative impact on the viability of the seed.

The prior art document US 4 703 704 A discloses a method for placing seeds inside a growth substrate according to the preamble of claim 1 and a seed insertion device for placing seeds inside a growth substrate according to the preamble of claim 10.

### BRIEF DESCRIPTION OF THE INVENTION

An object of the present invention is to provide a method for placing seeds inside a growth substrate which is safe and simple to operate so that the seeds can be effectively provided inside the growth substrate. A further object of the present invention is to provide a seed insertion device which provides an effective tool for placing the seed inside the growth substrate without a need for adding any further components to the growth substrate. A still further object of the present invention is to provide a growth substrate in which seeds are placed with the method for placing seeds inside a growth pocket or with the seed insertion device according to the invention.

The objects of the invention are achieved by a method for placing seeds inside a growth substrate and a seed insertion device which are characterized by what is stated in the independent claims. The preferred embodiments of the invention are disclosed in the dependent claims.

The invention is based on the idea of simplifying the seed placing into the growth substrate so that the growth pocket and the seed placing is provided with the same device without multiple phases which require different tools. The invention is further based on the idea of placing seeds inside the growth substrate which keeps the seeds inside it only by forces that result from the inherent properties of the substrate.

In a first aspect of the invention according to claim 1 a method for placing seeds inside a growth substrate comprises steps of arranging a seed insertion device in contact with the growth substrate such that a tip of the seed insertion device penetrates through an outer surface of the growth substrate; creating a growth pocket inside the growth substrate with the seed insertion device; supplying seeds to the growth pocket of the growth substrate via the seed insertion device; removing the seed insertion device from contact with the growth substrate; and closing the growth pocket of the growth substrate formed of growth material comprising elastic properties by elastic force of the growth substrate for forming a closed growth pocket such that the seeds remain in the closed growth pocket inside the growth substrate.

The elastic modulus (Young's modulus) of the growth material of the growth substrate measured at macroscopic scale is at least 3 kPa.

The seed insertion device preferably penetrates through the outer surface of the growth substrate such that the opening of the growth pocket formed inside the growth substrate is on the side of the growth substrate through which the plants formed by the seeds grow. The growth pocket together with the opening of the growth pocket closes when the seed insertion device is pulled out from the growth pocket. The growth substrate is formed of growth material which comprises elastic properties. The growth substrate may be a porous material with a structure of a sponge, foam, arrangement of fibrous elements or particles bound by elastic binder which provides the growth material elasticity at macroscopic scale. Alternatively, the growth substrate may comprise a thermal memory material that provides elastic forces when subjected to heat.

According to a preferred embodiment of the first aspect the step of creating the growth pocket comprises arranging the seed insertion device within the growth substrate such that growth material of the growth substrate separates and presses away from the seed insertion device when the seed insertion device penetrates the growth substrate thus forming the growth pocket.

The seed insertion device penetrates the growth substrate such that as it progresses into the growth substrate, a growth pocket made by the seed insertion device is formed due to separation in the growth material, which means that the edges of the growth pocket move apart from each other under the influence by the seed insertion device.

According to a preferred embodiment of the first aspect the step of arranging the seed insertion device within the growth substrate comprises arranging an insertion tube of the seed insertion device to penetrate the growth substrate; and forming the growth pocket in the growth substrate by the insertion tube.

The insertion device comprises an insertion tube which penetrates through the outer surface of the growth substrate and forms the growth pocket to the growth substrate. The insertion tube may have a tapered end which opens the growth pocket when penetrating in the growth material of the growth substrate. The insertion tube may at the same time form the growth pocket and provide a feed channel for the seeds to enter to the growth pocket.

According to a preferred embodiment of the first aspect the step of arranging the seed insertion device within the growth substrate comprises arranging an insertion tube of the seed insertion device to penetrate into the growth substrate; pushing a pushing core provided inside the insertion tube out from the insertion tube into the growth substrate; and forming the growth pocket in the growth substrate by the insertion core.

The insertion device comprises an insertion tube which penetrates through the outer surface of the growth substrate. The penetration of the insertion tube may be only to the outer surface of the growth substrate because the insertion tube comprises a pushing core within the insertion tube which penetrates in the growth material of the growth substrate. The pushing core therefore forms the growth pocket to the inside of the growth material of the growth substrate.

According to a preferred embodiment of the first aspect the step of arranging the seed insertion device within the growth substrate comprises arranging a spreading insert of the seed insertion device to penetrate into the growth substrate; spreading wings of the spreading insert apart within the growth substrate; and forming the growth pocket in the growth substrate by the spreading insert.

The insertion device comprises a spreading insert which penetrates through the outer surface of the growth substrate. The spreading insert comprises a pair of wings which move apart from each other when the spreading insert is provided in the growth material of the growth substrate thereby forming the growth pocket. The seeds may be fed through a feeding channel formed within the spreading insert.

According to a preferred embodiment of the first aspect the step of supplying seeds to the growth pocket comprises feeding seeds to the seed insertion device; conveying the seeds in the seed insertion device; and removing the seeds from the tip of the seed insertion device to the growth pocket formed by the seed insertion device.

The seeds are fed to the seed insertion device such that they travel in the seed insertion device to the tip whereby they are released to the growth pocket of the growth substrate which is formed by the seed insertion device.

According to a preferred embodiment of the first aspect the step of closing the growth pocket by elastic force of the growth substrate comprises providing the growth substrate having elastic properties.

The growth pocket thereby closes by itself because of the elasticity of the growth substrate such that when the seed insertion device is removed the growth pocket closes.

According to a preferred embodiment of the first aspect the method further comprises a step of applying pressing force to the growth substrate for further closing the growth pocket.

A pressing force provided outside the growth substrate may be applied to the growth substrate for closing the growth pocket. However, the pressing force or compression force applied to the growth substrate is only temporary.

According to a preferred embodiment of the first aspect the method further comprises a step of applying heat to the growth substrate for further closing the growth pocket.

When the growth substrate comprises growth material that has thermo elastic properties heat may be applied to the growth substrate for closing the growth pocket. The heat may be applied locally or to the whole growth substrate.

The growth substrate is preferably of non-woven growth material, and it may comprise organic fibres and glue. However, the growth substrate has porous structure which is foam-like. The growth material can be particles of organic material glued together by a glue; or fibrous nonwoven material, i.e., mass of arrangement of fibre elements; or other type of sponge structure, for example obtained by dissolving pore forming component out of a matrix; or foam obtained by expanding the growth material by a gas phase.

A seed insertion device according to claim 10 in a second aspect of the invention for placing seeds inside a growth substrate comprises a tip arranged to penetrate the growth substrate and to form a growth pocket inside the growth substrate; an insertion tube forming a feed channel into which the seeds are fed for feeding to the growth substrate, the feed channel having a feed head adapted to be arranged inside the growth substrate such that the seeds are fed through the feed head to the growth pocket; and an aperture provided at the feed head through which the seeds are fed from the feed channel into the growth pocket of the growth substrate; the tip is provided at the feed head of the feed channel such that the aperture extends through the feed head at the tip; and the feed head of the insertion tube is tapered.

The tip of the seed insertion device first penetrates an outer surface of the growth substrate such that the tip enters the growth substrate through the outer surface of the growth substrate, the tip being inside the growth substrate, thus forming a growth pocket inside the growth substrate. The feed channel has the feed head into which the feed channel extends, and which is arranged inside the growth substrate for feeding seeds from the feed head to the growth pocket inside the growth substrate. The seeds are fed through the aperture at the feed head from the feed channel to the growth pocket outside the seed insertion device.

According to the second aspect of the invention the seed insertion device comprises the insertion tube forming the feed channel having the feed head. The tip is provided at the feed head of the feed channel such that the aperture extends through the feed head at the tip.

In other words, the insertion tube is arranged to penetrate through the outer surface of the growth substrate into the growth substrate. The feed head of the insertion tube is tapered such that as the feed head progresses within the growth substrate, it forms the growth pocket inside the growth substrate. The aperture is provided at the tip of the feed head such that when the head has penetrated deep enough in the growth substrate, the seeds can be fed through the feed channel to the tip and through the aperture to the growth pocket.

In an embodiment not according to the second aspect but suitable with the method of the first aspect the seed insertion device comprises an insertion tube forming the feed channel having the feed head; and a pushing core provided inside the insertion tube and arranged to be moved along the feed channel and projecting outwards from the feed head. The pushing core comprises the tip arranged to penetrate the growth substrate and to form the growth pocket inside the growth substrate.

The insertion tube may then comprise a pushing core movably arranged inside the insertion tube. The pushing core may slide along the feed channel such that at least part of the pushing core slides out from the insertion tube to penetrate the growth substrate for forming the growth pocket. Thus the pushing core is arranged to form the growth pocket inside the growth substrate with the tip provided at the pushing core. When the growth pocket is formed in the growth substrate, the pushing core is drawn inside the insertion tube and the feed channel inside the insertion tube is provided for feeding the seeds. The same channel may thus serve for moving the pushing core and for feeding the seeds from the seed insertion device to the growth substrate.

In an embodiment not according to the second aspect but suitable with the method of the first aspect the seed insertion device comprises a spreading insert forming the feed channel having the feed head. The tip is provided at the feed head of the feed channel such that the aperture extends through the feed head at the tip.

The spreading insert may be a pair of inserts arranged to pass together through the outer surface of the growth substrate within the growth substrate and in the growth substrate they are pulled apart to form the growth pocket. The spreading insert comprises a feed channel in between the inserts, which the feed channel opens into the growth pocket when the inserts are pulled apart.

According to a preferred embodiment of the second aspect the seed insertion device is further provided with a seed tube connected to the feed channel. The seed tube can be connected to a pressurized air source such that the seed tube is arranged to supply pressurized air together with the seeds to the feed channel. Alternatively, the seeds in the feed channel can for example be pushed mechanically by a rod or a fibre inside the feed channel.

The feed channel may thus comprise a side channel, i.e. the seed tube, which delivers seeds to the feed channel. For example, when the pushing core also uses the feed channel, then the seed tube may communicate with the feed channel at a point so that a free feed channel remains between the seed tube junction and the pushing core has been drawn away from the tip.

A growth substrate according to the disclosure comprises growth material and at least one seed present inside the growth substrate, the growth substrate has an outer surface. The growth substrate has a predetermined form with a depth dimension extending from the outer surface inward to the growth substrate. The form of the growth substrate is preferably a cylinder or a cone or a truncated cone or the like, such that the outer surface is preferably the end surface of the form. For example, when the form is a cylinder, the outer surface is one of the end surfaces. The outer surface is a surface that is exposed to growth conditions, such as light, from which the plant grows out of the growth substrate.

The growth substrate according to the disclosure comprises a growth pocket extending from the outer surface of the growth substrate into the growth substrate. The at least one seed is provided within the growth pocket such that said at least one seed is subjected to compression provided by elastic force of the growth material. The growth pocket is formed by a seed insertion device through penetrating the outer surface into the growth material and pushing the growth material apart such that the growth pocket is formed. The at least one seed is placed in the growth pocket of the growth substrate and the growth pocket is closed due to elastic forces of the growth material which push the growth material around the seed and close the growth pocket to prevent the connection between the at least one seed and the outer surface of the growth substrate. In other words, the elastic forces of the growth material close the growth pocket and keep the at least one seed inside the growth substrate.

According to the disclosure the growth pocket may be closed from the outer surface of the growth substrate due to the elastic force provided by the growth material. The growth material of the growth substrate returns to its original shape after the growth pocket is formed and the seed insertion device is removed from the growth pocket. Therefore, the at least one seed is placed inside the growth pocket, preferably at a depth between one third and two thirds relative to the outer surface of the growth substrate. The elastic modulus (Young's modulus) of the growth material of the growth substrate measured at macroscopic scale is at least 3 kPa.

An advantage of the invention is that the method for placing seed becomes very simple and effective.

### BRIEF DESCRIPTION OF THE DRAWINGS

The invention is described in detail by means of specific embodiments with reference to the enclosed drawings, in which
Figure 1 shows a seed insertion device;
Figure 2 shows a seed insertion device;
Figure 3 shows a seed insertion device;
Figure 4 shows a seed insertion device according to the second aspect of the invention;
Figure 5a shows a cross-section of the seed insertion device shown in figure 3;
Figure 5b shows a cross-section of the seed insertion device shown in figure 4;
Figure 6a shows a seed insertion device in a first position;
Figure 6b shows a seed insertion device in a second position;
Figure 6c shows a seed insertion device in a third position;
Figure 7 shows a seed insertion device;
Figure 8 shows a seed insertion device; and
Figure 9 shows a seed insertion device in connection with a seed insertion apparatus.

### DETAILED DESCRIPTION OF THE INVENTION

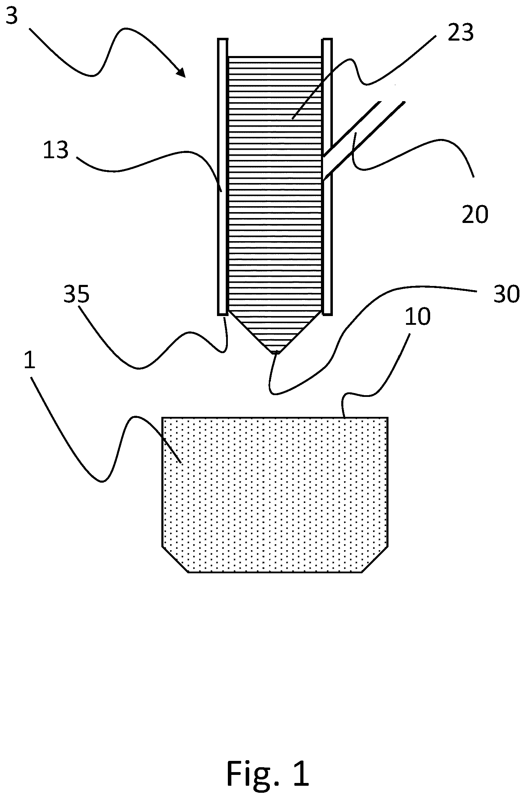

Figure 1 shows an embodiment of a seed insertion device 3 suitable with the method of the first aspect of the invention which comprises a tip 30 arranged to penetrate the growth substrate 1 through an outer surface 10 of the growth substrate 1 and to form a growth pocket 4 (not shown in figure 1 because the growth pocket is not formed yet in this stage) inside the growth substrate 1. The insertion device 3 further comprises a feed channel 32 into which the seeds are fed for feeding to the growth substrate 1. The feed channel 32 is in figure 1 provided with an insertion tube 13 having the tip 30. The feed channel 32 has a feed head 35 adapted to be arranged inside the growth substrate such that the seeds 2 are fed through the feed head 35 to the growth pocket 4 formed by the tip 30. The feed head 35 is preferably provided to penetrate at least partly the outer surface 10 of the growth substrate 1 when the pushing core 23 is used to form the growth pocket 4 and thus penetrate the outer surface 10 of the growth substrate 1. The seed insertion device 3 further comprises an aperture 31 provided at the feed head 35 through which the seeds 2 are fed from the feed channel 32 into the growth pocket of the growth substrate 1. In figure 1 the pushing core 23 is provided within the insertion tube 13 and protruding from the feed channel 32 through the aperture 31 to outside of the feed channel 32. The pushing core 23 is thus arranged movably inside the insertion tube 13. The insertion tube 13 comprises a connection to a seed tube 20 through which the seeds are fed to the feed channel 32. However, a separate seed tube 20 is not necessary if the pushing core 23 is removed from the feed channel 32 after forming the growth pocket 4 to the growth substrate 1.

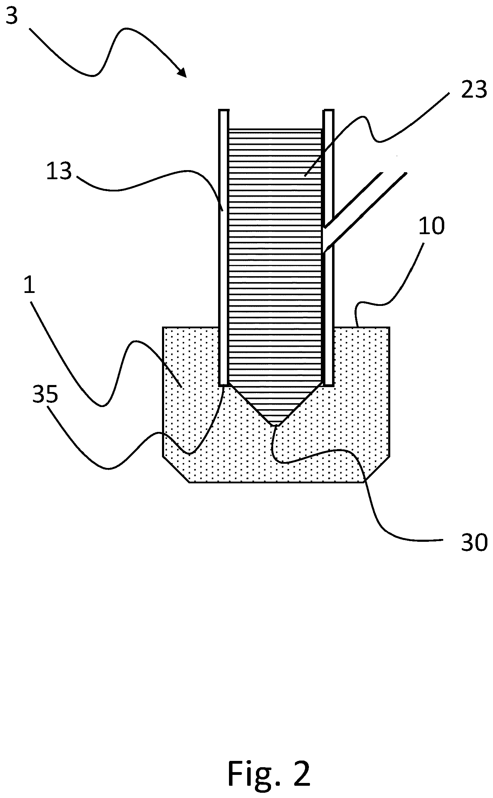

Figure 2 shows the seed insertion device 3 shown in figure 1 in a step in which the seed insertion device 3 is arranged in contact with the growth substrate 1 such that the tip 30 of the seed insertion device 3 penetrates through the outer surface 10 of the growth substrate 1. The seed insertion device 3 thus creating the growth pocket 4 inside the growth substrate 1 by the tip 30. The tip 30 is provided at the end of the pushing core 23 such that the tip 30 is sharp enough to penetrate the growth substrate 1 and move the growth material of the growth substrate 1 apart as the tip 30 penetrates forward in the growth substrate 1. Figure 2 shows that the feed head 35 of the insertion tube 13 has also penetrated the growth substrate 1.

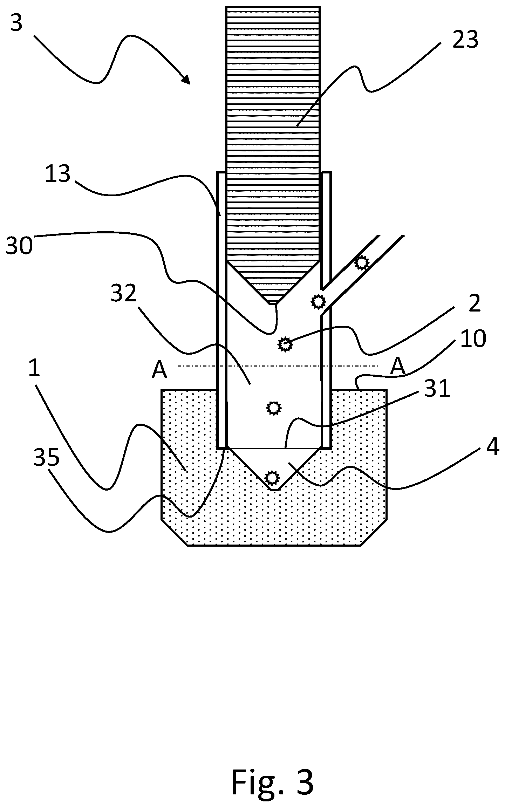

Figure 3 shows the seed insertion device 3 shown in figures 1 and 2 in a step in which the growth pocket 4 is created inside the growth substrate 1 and the step of supplying seeds 2 to the growth pocket 4 of the growth substrate 1 via the seed insertion device 3 is performed. The pushing core 23 has been drawn back inside the insertion tube 13 such that the seeds 2 can be fed via the feed channel 32 and through the aperture 31 to the growth pocket 4 inside the growth substrate 1.

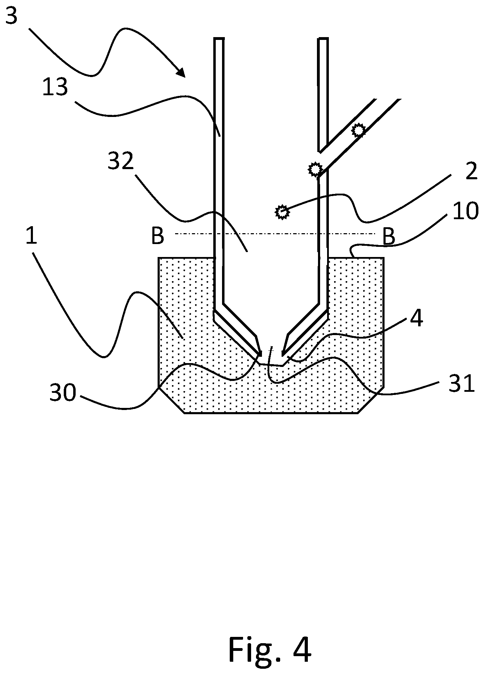

Figure 4 shows another embodiment of the seed insertion device 3 according to the second aspect of the invention and suitable with the method of the first aspect of the invention in which the insertion tube 13 forms the feed channel 32 having the feed head 35 and the tip 30 is provided at the feed head 35 of the feed channel 32 such that the aperture 31 extends through the feed head 35 at the tip 30. In other words, this embodiment of the seed insertion device 3 has a tapered feed head 35 having the tip 30 at the end with the aperture 31. Thus, the insertion tube 13 both forms the growth pocket 4 and feeds the seeds 2 into the growth pocket 4 by means of the tip 30.

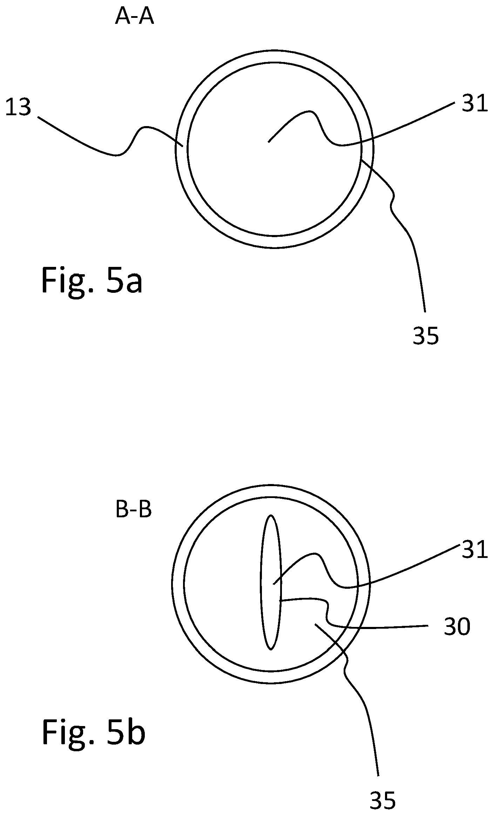

Figure 5a shows a cross-section of the seed insertion device 3 shown in figure 3 showing that the insertion tube 13 is in a tube form and comprises an aperture 31 provided at the feed head 35 through which the seeds 2 are fed from the feed channel into the growth pocket of the growth substrate. The pushing core 23 is movable inside the insertion tube 13 and arranged to protrude out from the aperture 31 at the feed head 35.

Figure 5b shows a cross-section of the seed insertion device 3 shown in figure 4 showing that the insertion tube 13 of this embodiment is also in the tube form as in the embodiment shown in figures 3 and 5a, but the feed head 35 tapers to form the tip 30, the tip 30 having the aperture 31 through which the seeds are fed to the growth pocket 4 in the growth substrate 1 formed by the tip 30.

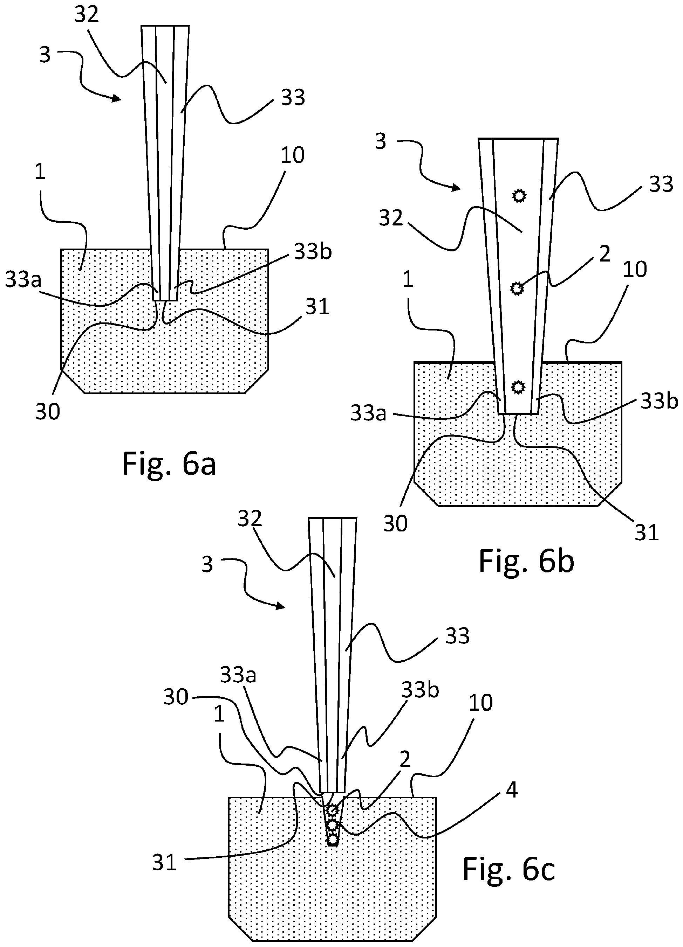

Figure 6a shows a seed insertion device 3 suitable with the method of the first aspect of the invention in which the seed insertion device 3 comprises a spreading insert 33 forming the feed channel 32 having the feed head 35 and the tip 30 is provided at the feed head 35 of the feed channel 32 so that the aperture 31 extends through the feed head 35 at the tip 30 providing and communication with the feed channel 32. The spreading insert 33 comprises spreading wings 33a, 33b which together penetrate the outer surface 10 of the growth substrate 1 such that the feed head of the seed insertion device 3 is provided within the growth substrate 1 as shown in figure 6a in which the seed insertion device 3 is in a first position forming the growth pocket 4 inside the growth substrate 1.

Figure 6b shows the seed insertion device 3 in a second position in which the feed head 35 of the spreading insert 33 is provided inside the growth substrate 1 and the spreading wings 33a, 33b of the spreading insert 33 are pulled apart to form the growth pocket 4 and to expand the feeding channel 32 inside the spreading insert 33 to feed the seeds 2 into the growth pocket 4. The growth substrate 1 is elastic such that as the spreading wings 33a, 33b move away from each other inside the growth substrate 1, the growth material of the growth substrate 1 compacts to form the growth pocket 4, and when the spreading wings 33a, 33b are pulled out of the growth substrate 1, the growth material returns and the growth pocket 4 closes keeping the seeds within the growth substrate 1.

Figure 6c shows the seed insertion device 3 in a third position, in which the spreading wings 33a, 33b of the spreading insert 33 are moved back together and the seed insertion device 3 is pulled out of the growth substrate 1. The elastic growth substrate 1 has been restored so that the growth pocket 4 closes, keeping the seeds 2 inside the growth substrate 1.

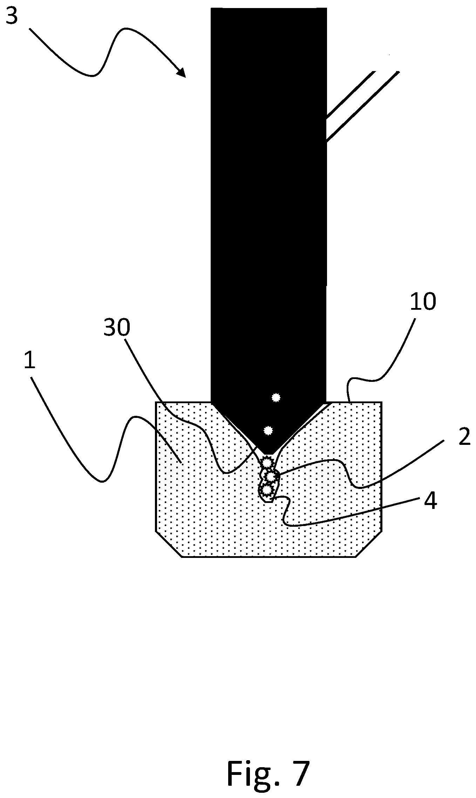

Figure 7 shows a seed insertion device 3 according to any of the embodiments shown in figures 1 - 6 having the tip 30 that has penetrated the outer surface 10 of the growth substrate 1 and formed the growth pocket 4. The seeds 2 are fed to the growth pocket 4 by the seed insertion device 3 which already has formed the growth pocket 4.

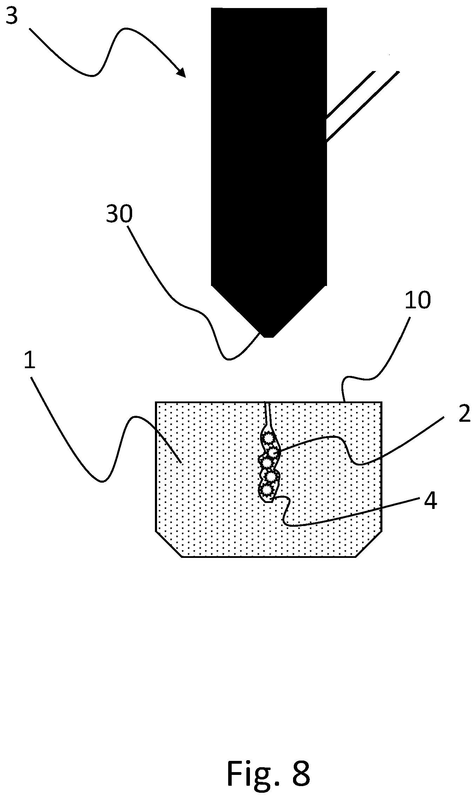

Figure 8 shows the seed insertion device 3 and the growth substrate 1, showing the steps of the method comprising: removing the seed insertion device 3 from contact with the growth substrate 1; and closing the growth pocket 4 by elastic force of the growth substrate 1 for forming a closed growth pocket 4 such that the seeds 2 remain in the closed growth pocket 4 inside the growth substrate 1. The seeds 2 are kept inside the growth substrate 1 by force of the elastic growth substrate 1 and further kept in place through adhesion to the growth substrate 1.

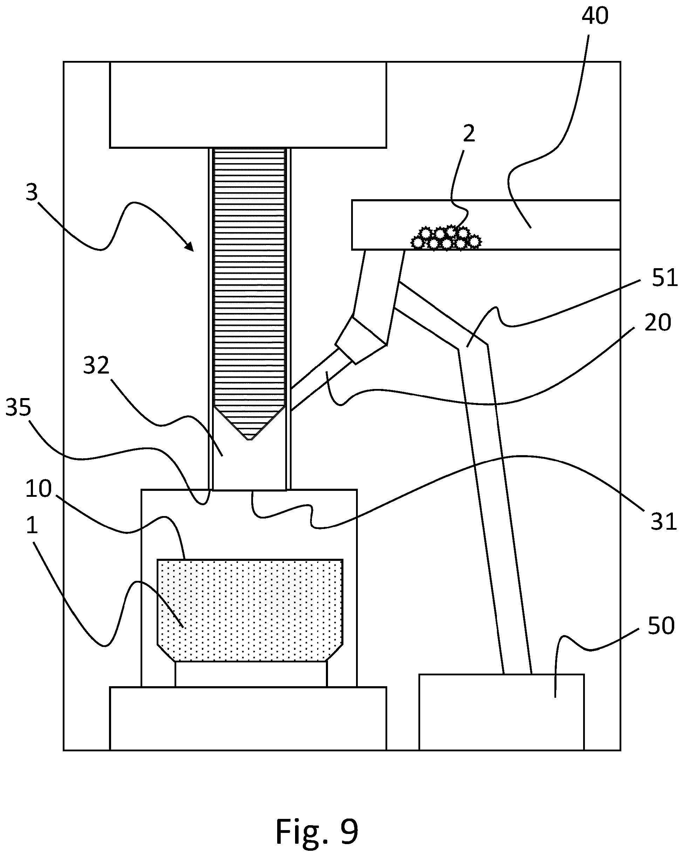

Figure 9 shows a seed insertion device 3 in connection with a seed insertion apparatus. The seed insertion device 3 of the seed insertion apparatus is according to any embodiment of the seed insertion device shown in figures 1-8. A seed tube 20 is connected to the feed channel 32 of the seed insertion device 3. The seed tube 20 is further connected to a pressurized air source 50 through a pressurised air communication 51 to the seed tube 20 such that the seed tube 20 is arranged to supply pressurized air to move the seeds to the feed channel 32 and further to the growth pocket 4 of the growth substrate 1. The seeds 2 are preferably provided in a tray or in a container which can be arranged to shake in order to assist the seeds to enter the seed tube 20.

The invention has been described above with reference to the examples shown in the figures. However, the invention is in no way restricted to the above examples but may vary within the scope of the claims.

## Claims

1. A method for placing seeds (2) inside a growth substrate (1), wherein the method comprises the steps of:
arranging a seed insertion device (3) in contact with the growth substrate (1) such that a tip (30) of the seed insertion device (3) penetrates through an outer surface (10) of the growth substrate (1);
creating a growth pocket (4) inside the growth substrate (1) with the seed insertion device (3);
supplying seeds (2) to the growth pocket (4) of the growth substrate (1) via the seed insertion device (3);
removing the seed insertion device (3) from contact with the growth substrate (1); and **characterized by** the step of
closing the growth pocket (4) of the growth substrate formed of growth material comprising elastic properties by elastic force of the growth substrate (1) for forming a closed growth pocket (4) such that the seeds (2) remain in the closed growth pocket (4) inside the growth substrate (1).

2. A method for placing seeds (2) inside a growth substrate (1) according to claim 1, **characterized in that** the step of creating the growth pocket (4) comprises:
arranging the seed insertion device (3) within the growth substrate (1) such that growth material of the growth substrate (1) separates and presses away from the seed insertion device when the seed insertion device (3) penetrates the growth substrate (1) thus forming the growth pocket (4).

3. A method for placing seeds (2) inside a growth substrate (1) according to claim 2, **characterized in that** the step of arranging the seed insertion device (3) within the growth substrate (1) comprises:
arranging an insertion tube (13) of the seed insertion device (3) to penetrate into the growth substrate (1); and
forming the growth pocket (4) in the growth substrate (1) by the insertion tube (13).

4. A method for placing seeds (2) inside a growth substrate (1) according to claim 2, **characterized in that** the step of arranging the seed insertion device (3) within the growth substrate (1) comprises:
arranging an insertion tube (13) of the seed insertion device (3) to penetrate the growth substrate (1);
pushing a pushing core (23) provided inside the insertion tube (13) out from the insertion tube (13) into the growth substrate (1); and
forming the growth pocket (4) in the growth substrate (1) by the insertion core (23).

5. A method for placing seeds (2) inside a growth substrate (1) according to claim 2, **characterized in that** the step of arranging the seed insertion device (3) within the growth substrate (1) comprises:
arranging a spreading insert (33) of the seed insertion device (3) to penetrate into the growth substrate (1);
spreading wings (33a, 33b) of the spreading insert (33) apart within the growth substrate (1); and
forming the growth pocket (4) in the growth substrate (1) by the spreading insert (33).

6. A method for placing seeds (2) inside a growth substrate (1) according to any preceding claim, **characterized in that** the step of supplying seeds (2) to the growth pocket (4) comprises:
feeding seeds (2) to the seed insertion device (3);
conveying the seeds (2) in the seed insertion device (3); and
removing the seeds (2) from the tip (30) of the seed insertion device (3) to the growth pocket (4) formed by the seed insertion device (3).

7. A method for placing seeds (2) inside a growth substrate (1) according to any preceding claim, **characterized in that** the step of closing the growth pocket (4) by elastic force of the growth substrate (1) comprises
providing the growth substrate (1) having elastic properties.

8. A method for placing seeds (2) inside a growth substrate (1) according to any preceding claim, **characterized in that** the method further comprises a step of applying pressing force to the growth substrate (1) for further closing the growth pocket (4).

9. A method for placing seeds (2) inside a growth substrate (1) according to any preceding claim, **characterized in that** the method further comprises a step of applying heat to the growth substrate (1) for further closing the growth pocket (4).

10. A seed insertion device (3) for placing seeds (2) inside a growth substrate (1), wherein the seed insertion device (3) comprises:
a tip (30) arranged to penetrate the growth substrate (1) and to form a growth pocket (4) inside the growth substrate (1);
an insertion tube (13) forming a feed channel (32) into which the seeds (2) are fed for feeding to the growth substrate (1), the feed channel (32) having a feed head (35) adapted to be arranged inside the growth substrate (1) such that the seeds (2) are fed through the feed head (35) to the growth pocket (4); and
an aperture (31) provided at the feed head (35) through which the seeds (2) are fed from the feed channel (32) into the growth pocket (4) of the growth substrate (1),
**characterized in that** the tip (30) is provided at the feed head (35) of the feed channel (32) such that the aperture (31) extends through the feed head (35) at the tip (30), and
the feed head (35) of the insertion tube (13) is tapered.

11. A seed insertion device (3) according to claim 10, **characterized in that** the seed insertion device (3) is further provided with a seed tube (20) connected to the feed channel (32), the seed tube (20) is connected to a pressurized air source such that the seed tube (20) is arranged to supply pressurized air together with the seeds (2) to the feed channel (32).

## Patentansprüche

1. Verfahren zum Platzieren von Samen (2) im Inneren eines Aufwuchssubstrats (1), wobei das Verfahren die folgenden Schritte umfasst:
Anordnen einer Sameneinsetzungsvorrichtung (3) in Kontakt mit dem Aufwuchssubstrat (1), sodass eine Spitze (30) der Sameneinsetzungsvorrichtung (3) durch eine Außenfläche (10) des Aufwuchssubstrats (1) hindurchdringt;
Herstellen einer Aufwuchstasche (4) im Inneren des Aufwuchssubstrats (1) mit der Sameneinsetzungsvorrichtung (3);
Zuführen von Samen (2) in die Aufwuchstasche (4) des Aufwuchssubstrats (1) über die Sameneinsetzungsvorrichtung (3);
Entfernen der Sameneinsetzungsvorrichtung (3) von einem Kontakt mit dem Aufwuchssubstrat (1); und **gekennzeichnet durch** den Schritt des Schließens der Aufwuchstasche (4) des Aufwuchssubstrats, die aus Aufwuchsmaterial ausgebildet ist, das elastische Eigenschaften umfasst, durch eine elastische Kraft des Aufwuchssubstrats (1) zum Ausbilden einer geschlossenen Aufwuchstasche (4), sodass die Samen (2) in der geschlossenen Aufwuchstasche (4) im Inneren des Aufwuchssubstrats (1) verbleiben.

2. Verfahren zum Platzieren von Samen (2) im Inneren eines Aufwuchssubstrats (1) nach Anspruch 1, **gekennzeichnet dadurch, dass** der Schritt des Herstellens der Aufwuchstasche (4) Folgendes umfasst:
Anordnen der Sameneinsetzungsvorrichtung (3) innerhalb des Aufwuchssubstrats (1), sodass sich das Aufwuchsmaterial des Aufwuchssubstrats (1) teilt und von der Sameneinsetzungsvorrichtung wegdrückt, wenn die Sameneinsetzungsvorrichtung (3) das Aufwuchssubstrat (1) durchdringt und somit die Aufwuchstasche (4) ausbildet.

3. Verfahren zum Platzieren von Samen (2) im Inneren eines Aufwuchssubstrats (1) nach Anspruch 2, **gekennzeichnet dadurch, dass** der Schritt des Anordnens der Sameneinsetzungsvorrichtung (3) innerhalb des Aufwuchssubstrats (1) Folgendes umfasst:
Anordnen einer Einsetzungsröhre (13) der Sameneinsetzungsvorrichtung (3), um in das Aufwuchssubstrat (1) einzudringen; und
Ausbilden der Aufwuchstasche (4) in dem Aufwuchssubstrat (1) durch die Einsetzungsröhre (13).

4. Verfahren zum Platzieren von Samen (2) im Inneren eines Aufwuchssubstrats (1) nach Anspruch 2, **gekennzeichnet dadurch, dass** der Schritt des Anordnens der Sameneinsetzungsvorrichtung (3) innerhalb des Aufwuchssubstrats (1) Folgendes umfasst:
Anordnen einer Einsetzungsröhre (13) der Sameneinsetzungsvorrichtung (3), um das Aufwuchssubstrat (1) zu durchdringen;
Schieben eines Schiebekerns (23), der im Inneren der Einsetzungsröhre (13) bereitgestellt ist, aus der Einsetzungsröhre (13) hinaus in das Aufwuchssubstrat (1); und
Ausbilden der Aufwuchstasche (4) in dem Aufwuchssubstrat (1) durch den Einsetzungskern (23).

5. Verfahren zum Platzieren von Samen (2) im Inneren eines Aufwuchssubstrats (1) nach Anspruch 2, **gekennzeichnet dadurch, dass** der Schritt des Anordnens der Sameneinsetzungsvorrichtung (3) innerhalb des Aufwuchssubstrats (1) Folgendes umfasst:
Anordnen eines Spreizeinsatzes (33) der Sameneinsetzungsvorrichtung (3), um in das Aufwuchssubstrat (1) einzudringen;
Abspreizen von Flügeln (33a, 33b) des Spreizeinsatzes (33) innerhalb des Aufwuchssubstrats (1); und
Ausbilden der Aufwuchstasche (4) in dem Aufwuchssubstrat (1) durch den Spreizeinsatz (33).

6. Verfahren zum Platzieren von Samen (2) im Inneren eines Aufwuchssubstrats (1) nach einem der vorhergehenden Ansprüche, **gekennzeichnet dadurch, dass** der Schritt des Zuführens von Samen (2) in die Aufwuchstasche (4) Folgendes umfasst:
Einspeisen von Samen (2) in die Sameneinsetzungsvorrichtung (3);
Fördern der Samen (2) in die Sameneinsetzungsvorrichtung (3); und
Entfernen der Samen (2) aus der Spitze (30) der Sameneinsetzungsvorrichtung (3) in die Aufwuchstasche (4), die durch die Sameneinsetzungsvorrichtung (3) ausgebildet ist.

7. Verfahren zum Platzieren von Samen (2) im Inneren eines Aufwuchssubstrats (1) nach einem der vorhergehenden Ansprüche, **gekennzeichnet dadurch, dass** der Schritt des Schließens der Aufwuchstasche (4) durch eine elastische Kraft des Aufwuchssubstrats (1) das Bereitstellen des Aufwuchssubstrats (1), das elastische Eigenschaften aufweist, umfasst.

8. Verfahren zum Platzieren von Samen (2) im Inneren eines Aufwuchssubstrats (1) nach einem der vorhergehenden Ansprüche, **gekennzeichnet dadurch, dass** das Verfahren ferner einen Schritt des Anwendens einer Druckkraft auf das Aufwuchssubstrat (1) zum weiteren Schließen der Aufwuchstasche (4) umfasst.

9. Verfahren zum Platzieren von Samen (2) im Inneren eines Aufwuchssubstrats (1) nach einem der vorhergehenden Ansprüche, **gekennzeichnet dadurch, dass** das Verfahren ferner einen Schritt des Anwendens von Wärme auf das Aufwuchssubstrat (1) zum weiteren Schließen der Aufwuchstasche (4) umfasst.

10. Sameneinsetzungsvorrichtung (3) zum Platzieren von Samen (2) im Inneren eines Aufwuchssubstrats (1), wobei die Sameneinsetzungsvorrichtung (3) Folgendes umfasst:
eine Spitze (30), die dazu angeordnet ist, das Aufwuchssubstrat (1) zu durchdringen und eine Aufwuchstasche (4) im Inneren des Aufwuchssubstrats (1) auszubilden;
eine Einsetzungsröhre (13), die einen Einspeisekanal (32) ausbildet, in den die Samen (2) zum Einspeisen in das Aufwuchssubstrat (1) eingespeist werden, wobei der Einspeisekanal (32) einen Einspeisekopf (35) aufweist, der dazu angepasst ist, im Inneren des Aufwuchssubstrats (1) so angeordnet zu sein, sodass die Samen (2) durch den Einspeisekopf (35) in die Aufwuchstasche (4) eingespeist werden; und
eine an dem Einspeisekopf (35) bereitgestellte Öffnung (31), durch die die Samen (2) aus dem Einspeisekanal (32) in die Aufwuchstasche (4) des Aufwuchssubstrats (1) eingespeist werden,
**gekennzeichnet dadurch, dass** die Spitze (30) an dem Einspeisekopf (35) des Einspeisekanals (32) so bereitgestellt ist, dass sich die Öffnung (31) durch den Einspeisekopf (35) an der Spitze (30) erstreckt und der Einspeisekopf (35) der Einsetzungsröhre (13) verjüngt ist.

11. Sameneinsetzungsvorrichtung (3) nach Anspruch 10, **gekennzeichnet dadurch, dass** die Sameneinsetzungsvorrichtung (3) ferner mit einer Samenröhre (20) versehen ist, die mit dem Einspeisekanal (32) verbunden ist, wobei die Samenröhre (20) mit einer Druckluftquelle so verbunden ist, dass die Samenröhre (20) dazu angeordnet ist, Druckluft zusammen mit den Samen (2) zu dem Einspeisekanal (32) zuzuführen.

## Revendications

1. Procédé pour placer des graines (2) à l'intérieur d'un substrat de croissance (1), dans lequel le procédé comprend les étapes de :
positionnement d'un dispositif d'insertion de graines (3) en contact avec le substrat de croissance (1) de sorte qu'une pointe (30) du dispositif d'insertion de graines (3) pénètre à travers une surface extérieure (10) du substrat de croissance (1) ;
création d'une cavité de croissance (4) à l'intérieur du substrat de croissance (1) avec le dispositif d'insertion de graines (3) ;
alimentation des graines (2) vers la cavité de croissance (4) du substrat de croissance (1) via le dispositif d'insertion de graines (3) ;
retrait du dispositif d'insertion de graines (3) du contact avec le substrat de croissance (1) ; et **caractérisé par** l'étape de
fermeture de la cavité de croissance (4) du substrat de croissance formé d'un matériau de croissance comprenant des propriétés élastiques par force élastique du substrat de croissance (1) pour former une cavité de croissance (4) fermée de sorte que les graines (2) restent dans la cavité de croissance (4) fermée à l'intérieur du substrat de croissance (1).

2. Procédé pour placer des graines (2) à l'intérieur d'un substrat de croissance (1) selon la revendication 1, **caractérisé en ce que** l'étape de création de la cavité de croissance (4) comprend :
le positionnement du dispositif d'insertion de graines (3) à l'intérieur du substrat de croissance (1) de sorte que le matériau de croissance du substrat de croissance (1) se sépare et s'écarte du dispositif d'insertion de graines lorsque le dispositif d'insertion de graines (3) pénètre dans le substrat de croissance (1), formant ainsi la cavité de croissance (4).

3. Procédé pour placer des graines (2) à l'intérieur d'un substrat de croissance (1) selon la revendication 2, **caractérisé en ce que** l'étape de positionnement du dispositif d'insertion de graines (3) à l'intérieur du substrat de croissance (1) comprend :
le positionnement d'un tube d'insertion (13) du dispositif d'insertion de graines (3) pour pénétrer dans le substrat de croissance (1) ; et
la formation de la cavité de croissance (4) dans le substrat de croissance (1) au moyen du tube d'insertion (13).

4. Procédé pour placer des graines (2) à l'intérieur d'un substrat de croissance (1) selon la revendication 2, **caractérisé en ce que** l'étape de positionnement du dispositif d'insertion de graines (3) à l'intérieur du substrat de croissance (1) comprend :
le positionnement d'un tube d'insertion (13) du dispositif d'insertion de graines (3) pour pénétrer le substrat de croissance (1) ;
le déplacement d'un noyau poussoir (23) disposé à l'intérieur du tube d'insertion (13) hors du tube d'insertion (13) dans le substrat de croissance (1) ; et
la formation de la cavité de croissance (4) dans le substrat de croissance (1) au moyen du noyau d'insertion (23).

5. Procédé pour placer des graines (2) à l'intérieur d'un substrat de croissance (1) selon la revendication 2, **caractérisé en ce que** l'étape de positionnement du dispositif d'insertion de graines (3) à l'intérieur du substrat de croissance (1) comprend :
le positionnement d'un insert d'écartement (33) du dispositif d'insertion de graines (3) pour pénétrer dans le substrat de croissance (1) ;
l'écartement des ailes (33a, 33b) de l'insert d'écartement (33) à l'intérieur du substrat de croissance (1) ; et
la formation de la cavité de croissance (4) dans le substrat de croissance (1) au moyen de l'insert d'écartement (33).

6. Procédé pour placer des graines (2) à l'intérieur d'un substrat de croissance (1) selon l'une quelconque des revendications précédentes, **caractérisé en ce que** l'étape d'alimentation des graines (2) vers la cavité de croissance (4) comprend :
l'alimentation des graines (2) vers le dispositif d'insertion de graines (3) ;
le transport des graines (2) dans le dispositif d'insertion de graines (3) ; et
le retrait des graines (2) de la pointe (30) du dispositif d'insertion de graines (3) vers la cavité de croissance (4) formée par le dispositif d'insertion de graines (3).

7. Procédé pour placer des graines (2) à l'intérieur d'un substrat de croissance (1) selon l'une quelconque des revendications précédentes, **caractérisé en ce que** l'étape de fermeture de la cavité de croissance (4) par force élastique du substrat de croissance (1) comprend
la fourniture du substrat de croissance (1) ayant des propriétés élastiques.

8. Procédé pour placer des graines (2) à l'intérieur d'un substrat de croissance (1) selon l'une quelconque des revendications précédentes, **caractérisé en ce que** le procédé comprend en outre une étape d'application d'une force de pression sur le substrat de croissance (1) pour fermer davantage la cavité de croissance (4).

9. Procédé pour placer des graines (2) à l'intérieur d'un substrat de croissance (1) selon l'une quelconque des revendications précédentes, **caractérisé en ce que** le procédé comprend en outre une étape d'application de la chaleur au substrat de croissance (1) pour fermer davantage la cavité de croissance (4).

10. Dispositif d'insertion de graines (3) pour placer des graines (2) à l'intérieur d'un substrat de croissance (1), dans lequel le dispositif d'insertion de graines (3) comprend :
une pointe (30) agencée pour pénétrer le substrat de croissance (1) et pour former une cavité de croissance (4) à l'intérieur du substrat de croissance (1) ;
un tube d'insertion (13) formant un canal d'alimentation (32) dans lequel les graines (2) sont alimentées pour être alimentées vers le substrat de croissance (1), le canal d'alimentation (32) ayant une tête d'alimentation (35) adaptée pour être agencée à l'intérieur du substrat de croissance (1) de sorte que les graines (2) soient alimentées à travers la tête d'alimentation (35) vers la cavité de croissance (4) ; et
une ouverture (31) disposée au niveau de la tête d'alimentation (35) à travers laquelle les graines (2) sont alimentées depuis le canal d'alimentation (32) vers la cavité de croissance (4) du substrat de croissance (1),
**caractérisé en ce que** la pointe (30) est disposée au niveau de la tête d'alimentation (35) du canal d'alimentation (32) de sorte que l'ouverture (31) s'étende à travers la tête d'alimentation (35) au niveau de la pointe (30), et la tête d'alimentation (35) du tube d'insertion (13) est effilée.

11. Dispositif d'insertion de graines (3) selon la revendication 10, **caractérisé en ce que** le dispositif d'insertion de graines (3) est en outre pourvu d'un tube de graines (20) raccordé au canal d'alimentation (32), le tube de graines (20) est raccordé à une source d'air sous pression de sorte que le tube de graines (20) est agencé pour alimenter de l'air sous pression conjointement avec les graines (2) vers le canal d'alimentation (32).
